# EUROPÄISCHE PATENTSCHRIFT

(11) **EP 2 544 795 B1**
(45) Veröffentlichungstag und Bekanntmachung des Hinweises auf die Patenterteilung: **30.04.2014**
(21) Anmeldenummer: 11707413.8
(22) Anmeldetag: 09.03.2011
(51) Int. Cl.: B01D 53/68

(54) **VERFAHREN ZUR ENTSORGUNG HEXACHLORDISILAN-HALTIGER DÄMPFE**
PROCESS FOR DISPOSAL OF HEXACHLORODISILANE-CONTAINING VAPORS
PROCÉDÉ POUR L'ÉLIMINATION DE VAPEURS CONTENANT DE L'HEXACHLORODISILANE

(30) Priorität: 12.03.2010 DE 102010002812
(43) Veröffentlichungstag der Anmeldung: 16.01.2013
(73) Patentinhaber: Wacker Chemie AG, 81737 München (DE)
(72) Erfinder: KNIES, Wolfgang, 84489 Burghausen (DE); BÖGERSHAUSEN, Karin, 84489 Burghausen (DE); EIBLMEIER, Hans, 84489 Burghausen (DE)
(74) Vertreter: Fritz, Helmut
(86) Internationale Anmeldenummer: PCT/EP2011/053523
(87) Internationale Veröffentlichungsnummer: WO 2011/110586

(56) Entgegenhaltungen:
- EP-A2- 2 000 195
- DE-A1- 3 503 262
- GB-A- 993 249
- JP-A- 11 253 741

## Beschreibung

Hexachlordisilan wird in der Chipfertigung in zunehmendem Ausmaß eingesetzt. Häufig wird es über CVD-Prozesse über die Gasphase abgeschieden. Hierbei verbleiben jedoch noch Dämpfe, die nach dem Verlassen der Abscheidungskammern behandelt werden müssen.

In US 2009/0104100 A1 wird die Behandlung Hexachlordisilanhaltiger Abgase beschrieben. Hierbei wird das Abgas in einer aufwendigen Apparatur zunächst unter Feuchtigkeitsausschluss oxidiert, bevor es durch einen Wäscher, der mit Wasser gefüllt ist, durchgeleitet wird.

Bei der Reaktion von Hexachlordisilan mit Wasser oder Feuchtigkeit im Allgemeinen wird HCl-Gas freigesetzt. Dieses greift die Silizium-Silizium-Bindung an. Hierdurch entstehen Si-H-haltige Hydrolyseprodukte, die sich bei mechanischem Kontakt, z.B. durch Reibung, unter Funkenbildung zersetzen. Die Hydrolyseprodukte in fester Form können sogar unter Wasser unter Funkenbildung zerfallen.

Aufgabe der Erfindung ist den Stand der Technik zu verbessern und insbesondere ein Verfahren zur Verfügung zu stellen, bei dem Hexachlordisilanrückstände gefahrlos entsorgt werden können.

Insofern musste nach einer Methode geforscht werden, die die gefahrlose Entsorgung von Dämpfen oder auch von flüssigem Hexachlordisilan ermöglicht. Es wurde gefunden, dass beim Einleiten von Hexachlordisilan in ein Gemisch von Harnstoff und Alkohol keine zündfähigen Mischungen entstehen.

Überraschend wurde gefunden, dass Harnstoff einerseits ausreichend basisch ist, um freiwerdendes HCl zu binden, auf der anderen Seite jedoch keinerlei Umlagerungen des Hexachlordisilans katalysiert.

Gegenstand der Erfindung ist ein Verfahren zur Entsorgung von Hexachlordisilan-haltigen Dämpfen, dadurch gekennzeichnet, dass Hexachlordisilan-haltige Dämpfe in ein Gemisch aufweisend: bei 900 bis 1100 hPa und 25°C flüssigen unpolaren Kohlenwasserstoff, Harnstoff und bei 900 bis 1100 hPa und 25°C flüssigen Alkohol eingeleitet wird.

Als Lösungsmittel können folgende unpolare Kohlenwasserstoffe verwendet werden:
Vorzugsweise unpolare Kohlenwasserstoffe, wie aliphatische oder aromatische, bevorzugt Lösungsmittel auf der Basis von Kohlenwasserstoffen mit vorzugsweise einem Siedepunkt unter 100°C bei Normaldruck (900 bis 1100 hPa), vorzugsweise Kohlenwasserstoffe mit 1 bis 20 Kohlenstoffatomen, bevorzugt mit 6 bis 12 Kohlenstoffatomen, besonders bevorzugt Octan, Nonan, Decan, Benzol, Touluol, Xylol, wobei Xylol besonders bevorzugt ist.

Als Alkohole können folgende verwendet werden:
Vorzugsweise Alkohole, die bei 900 bis 1100 hPa und 25°C flüssig sind, vorzugsweise mit einem Siedepunkt von 50° - 150°C, bevorzugt von 90° bis 110°C, besonders bevorzugt von 100° bis 120°C, alle bei einem Druck von 900 bis 1100 hPa , vorzugsweise mit 1 bis 6 Kohlenstoffatomen, bevorzugt mit 3 bis 5 Kohlenstoffatomen, monofunktionelle Alkohole, di- oder mehrfach funktionelle Alkohole, besonders bevorzugt Pentanole, wie 1-Pentanol, 2-Pentanol, 3-Pentanol sowie 1-Butanol, 2-Butanol, t.-Butanol, 1-Propanol, 2-Propanol, wobei t.-Butanol besonders bevorzugt ist.

Bei Verwendung von hochsiedendem Alkohol zur Abgasbehandlung werden bezogen auf 1 mol Alkohol:
- 0,1 bis 0,5 Mol Harnstoff, besonders bevorzugt 0,2 bis 0,4 Mol
- 10 bis 200 ml Lösemittel, besonders bevorzugt 50 bis 100 ml Lösemittel eingesetzt.

### Beispiel

### Behandlung Hexachlordisilan-haltiger Abgase

Die Abgase aus einer Apparatur, in der Hexachlordisilan unter Stickstoff destilliert wird, werden durch ein Gemisch von 50 ml Xylol, 50 ml t.-Butanol und 10 g Harnstoff geleitet. Das Gemisch wird mit einem Magnetrührer gerührt. Am Gasauslass bilden sich im Gegensatz zu einer Apparatur, in der das Abgas nur durch Silikonöl geleitet wird, keine weißen Beläge, die beim Berühren mit einem Metall zünden.

Im Rahmen der vorliegenden Erfindung sind, falls jeweils nicht anders angegeben, alle Mengen- und Prozentangaben auf das Gewicht und alle Prozentangaben sind auf das Gesamtgewicht bezogen, alle Temperaturen Raumtemperatur 25°C und alle Drücke bei der umgebenden Atmosphäre, also 900 bis 1100 hPa. Alle Viskositäten werden bei 25°C bestimmt.

## Patentansprüche

1. Verfahren zur Entsorgung von Hexachlordisilan-haltigen Dämpfen, **dadurch gekennzeichnet, dass** Hexachlordisilan-haltige Dämpfe in ein Gemisch aufweisend bei 900 bis 1100 hPa und 25°C flüssigen unpolaren Kohlenwasserstoff, Harnstoff und einem bei 900 bis 1100 hPa und 25°C flüssigem Alkohol eingeleitet wird.

2. Verfahren zur Entsorgung von Hexachlordisilan-haltigen Dämpfen nach Anspruch 1, **dadurch gekennzeichnet, dass** der Kohlenwasserstoff einen Siedepunkt unter 100°C bei Normaldruck (900 bis 1100 hPa) aufweist.

3. Verfahren zur Entsorgung von Hexachlordisilan-haltigen Dämpfen nach Anspruch 1 oder 2, **dadurch gekennzeichnet, dass** der Kohlenwasserstoff 1 bis 20 Kohlenstoffatome aufweist.

4. Verfahren zur Entsorgung von Hexachlordisilan-haltigen Dämpfen nach Anspruch 3, **dadurch gekennzeichnet, dass** der Kohlenwasserstoff 6 bis 12 Kohlenstoffatome aufweist.

5. Verfahren zur Entsorgung von Hexachlordisilan-haltigen Dämpfen nach einem oder mehreren der vorherigen Ansprüche, **dadurch gekennzeichnet, dass** der Kohlenwasserstoff Xylol ist.

6. Verfahren zur Entsorgung von Hexachlordisilan-haltigen Dämpfen nach einem oder mehreren der vorherigen Ansprüche, **dadurch gekennzeichnet, dass** der Alkohol ein Alkohol mit 1 bis 6 Kohlenstoffatomen ist.

7. Verfahren zur Entsorgung von Hexachlordisilan-haltigen Dämpfen nach einem oder mehreren der vorherigen Ansprüche, **dadurch gekennzeichnet, dass** der Alkohol ausgewählt wird aus 1-Pentanol, 2-Pentanol, 3-Pentanol, 1-Butanol, 2-Butanol, t.-Butanol, 1-Propanol, 2-Propanol.

## Claims

1. Process for disposing of hexachlorodisilane-containing vapors, **characterized in that** hexachlorodisilane-containing vapors are introduced into a mixture comprising a nonpolar hydrocarbon which is liquid at 900 to 1100 hPa and 25°C, urea and an alcohol which is liquid at 900 to 1100 hPa and 25°C.

2. Process for disposing of hexachlorodisilane-containing vapors according to Claim 1, **characterized in that** the hydrocarbon has a boiling point below 100°C at standard pressure (900 to 1100 hPa).

3. Process for disposing of hexachlorodisilane-containing vapors according to Claim 1 or 2, **characterized in that** the hydrocarbon has 1 to 20 carbon atoms.

4. Process for disposing of hexachlorodisilane-containing vapors according to Claim 3, **characterized in that** the hydrocarbon has 6 to 12 carbon atoms.

5. Process for disposing of hexachlorodisilane-containing vapors according to one or more of the preceding claims, **characterized in that** the hydrocarbon is xylene.

6. Process for disposing of hexachlorodisilane-containing vapors according to one or more of the preceding claims, **characterized in that** the alcohol is an alcohol having 1 to 6 carbon atoms.

7. Process for disposing of hexachlorodisilane-containing vapors according to one or more of the preceding claims, **characterized in that** the alcohol is selected from 1-pentanol, 2-pentanol, 3-pentanol, 1-butanol, 2-butanol, t-butanol, 1-propanol, 2-propanol.

## Revendications

1. Procédé pour l'élimination de vapeurs contenant de l'hexachlorodisilane, **caractérisé en ce qu'**on fait passer des vapeurs contenant de l'hexachlorodisilane dans un mélange contenant un hydrocarbure non polaire liquide sous 900 à 1 100 hPa et à 25 °C, de l'urée et un alcool liquide sous 900 à 1 100 hPa et à 25 °C.

2. Procédé pour l'élimination de vapeurs contenant de l'hexachlorodisilane selon la revendication 1, **caractérisé en ce que** l'hydrocarbure présente un point d'ébullition inférieur à 100 °C sous la pression normale (900 à 1 100 hPa).

3. Procédé pour l'élimination de vapeurs contenant de l'hexachlorodisilane selon la revendication 1 ou 2, **caractérisé en ce que** l'hydrocarbure comporte de 1 à 20 atomes de carbone.

4. Procédé pour l'élimination de vapeurs contenant de l'hexachlorodisilane selon la revendication 3, **caractérisé en ce que** l'hydrocarbure comporte de 6 à 12 atomes de carbone.

5. Procédé pour l'élimination de vapeurs contenant de l'hexachlorodisilane selon une ou plusieurs des revendications précédentes, **caractérisé en ce que** l'hydrocarbure est le xylène.

6. Procédé pour l'élimination de vapeurs contenant de l'hexachlorodisilane selon une ou plusieurs des revendications précédentes, **caractérisé en ce que** l'alcool est un alcool ayant de 1 à 6 atomes de carbone.

7. Procédé pour l'élimination de vapeurs contenant de l'hexachlorodisilane selon une ou plusieurs des revendications précédentes, **caractérisé en ce que** l'alcool est choisi parmi le 1-pentanol, le 2-pentanol, le 3-pentanol, le 1-butanol, le 2-butanol, le tert-butanol, le 1-propanol, le 2-propanol.
